(19) **Europäisches Patentamt**
**European Patent Office**
**Office européen des brevets**

(11) **EP 1 659 802 B1**

(12) **EUROPEAN PATENT SPECIFICATION**

(45) Date of publication and mention
of the grant of the patent:
**23.07.2008 Bulletin 2008/30**

(51) Int Cl.:
*H04N 7/68* (2006.01)

(21) Application number: **06075130.2**

(22) Date of filing: **05.10.2001**

(54) **Method and apparatus for compensating for motion vector errors in image data**

Verfahren und Vorrichtung zur Kompensation von fehlerhaften Bewegungsvektoren in Bilddaten

Procédé et dispositif de compensation d'erreur des vecteurs mouvement dans des données d'image

(84) Designated Contracting States:
**DE FR GB**

(43) Date of publication of application:
**24.05.2006 Bulletin 2006/21**

(62) Document number(s) of the earlier application(s) in
accordance with Art. 76 EPC:
**01308524.6 / 1 301 044**

(73) Proprietors:
• **Mitsubishi Electric Information Technology Centre**
**Europe B.V.**
**Guildford, Surrey GU2 5YD (GB)**
Designated Contracting States:
**GB**
• **MITSUBISHI DENKI KABUSHIKI KAISHA**
**Chiyoda-ku**
**Tokyo 100-8310 (JP)**
Designated Contracting States:
**DE FR**

(72) Inventors:
• **Bober, Miroslaw**
**Guildford**
**Surrey GU1 2SE (GB)**
• **Ghanbari, Souroush**
**Guildford**
**Surrey GU1 1HS (GB)**

(74) Representative: **Whitlock, Holly Elizabeth Ann et al**
**R G C Jenkins & Co,**
**26 Caxton Street**
**London SW1H 0RJ (GB)**

(56) References cited:
**EP-A- 0 645 933** **EP-A- 0 727 910**

• PATENT ABSTRACTS OF JAPAN vol. 2000, no. 09, 13 October 2000 (2000-10-13) -& JP 2000 184336 A (CANON INC), 30 June 2000 (2000-06-30) -& US 2003/031253 A1 (ITOKAWA OSAMU) 13 February 2003 (2003-02-13)
• HASKELL P ET AL: "Resynchronization of motion compensated video affected by ATM cell loss" DIGITAL SIGNAL PROCESSING 2, ESTIMATION, VLSI. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, vol. 5 CONF. 17, 23 March 1992 (1992-03-23), pages 545-548, XP010058890 ISBN: 0-7803-0532-9
• WANG Y ET AL: "ERROR CONTROL AND CONCEALMENT FOR VIDEO COMMUNICATION: A REVIEW" PROCEEDINGS OF THE IEEE, IEEE. NEW YORK, US, vol. 86, no. 5, May 2000 (2000-05), pages 974-997, XP000933873 ISSN: 0018-9219

**Description**

The invention relates to a method and apparatus for processing image data. The invention relates especially to a method of processing image data to compensate for errors occurring, for example as a result of transmission. The invention is particularly concerned with errors in motion vectors.

EP-A-0 645 933 describes an image reproducing apparatus and method that reproduces an encoded image signal, detects a motion vector of a block including an undecodable image signal, and structures an image signal for the block. An interpolation circuit estimates the motion vector of an error block by using the motion vectors of surrounding blocks. In one method, input motion vectors are classified as either large vectors or small vectors. A mean vector for the large vectors and for the small vectors is calculated. The estimated motion vector for the error block is determined as the mean vector of the large or small vectors according to whether the number of large vectors is greater than or less than the number of small vectors. In another method, the directions of the motion vectors in three consecutive fields are compared.

Haskell et al "Resynchronisation of motion compensated video affected by ATM cell loss", Digital Signal Processing 2, Estimation, VLSI, San Francisco, March 23-26, 1992, Proceedings of the International Conference on Acoustics, Speech and Signal Processing (ICASSP), New York, IEEE, US, Vol. 5, Conf. 17, 23 March 1992, Pages 545 to 548, describes techniques for the recovery of lost motion vectors. The method uses motion vectors of neighbouring image blocks as a candidates for the motion vector of the lost image block. One concealment technique uses the motion vector of the block in the previous frame. In another technique, one of the motion vectors in the current frame that best moves in the direction of the motion vector of the same block position in the previous frame is used.

US-A-2003/031253 describes an image processing apparatus and method where image data is input and separated into foreground object data and background object data. Image data in a missing portion of the background object data is interpolated by using image data around the missing portion. The motion vectors of surrounding image blocks are arranged according to their size. The largest number of motion vectors having the same size is then used to determine an average, which is an estimate for the target image block.

Image data, especially video bitstreams, are very sensitive to errors. For example, a single bit error in a coded video bitstream can result in serious degradation in displayed picture quality. Error connection schemes are known and widely used, but they are not always successful. When errors, for example, bit errors occurring during transmission, cannot be fully corrected by an error correction scheme, it is known to use error detection and concealment to conceal the corruption of the image caused by the error.

Known types of error concealment algorithms fall generally into two classes: spatial concealment and temporal concealment. In spatial concealment, missing data are reconstructed using neighbouring spatial information while in temporal concealment they are reconstructed using data in previous frames.

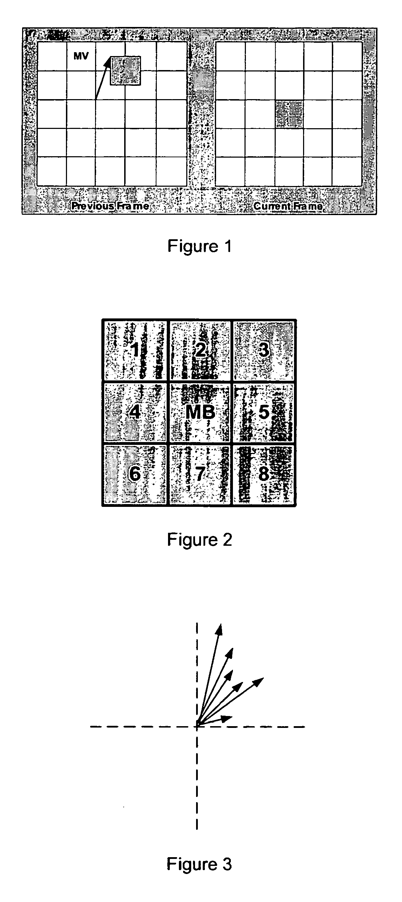

One known method of performing temporal concealment by exploiting the temporal correlation in video signals is to replace a damaged macroblock (MB) by the spatially corresponding MB in the previous frame, as disclosed in US 5,910,827. This method is referred to as the copying algorithm. Although this method is simple to implement, it can produce bad concealment in areas where motion is present. Significant improvement can be obtained by replacing a damaged MB with a motion-compensated block from the previous frame. Fig. 1 illustrates this technique. However, in order to do this successfully, the motion vector is required, and the motion vector may not be available if the macroblock data has been corrupted.

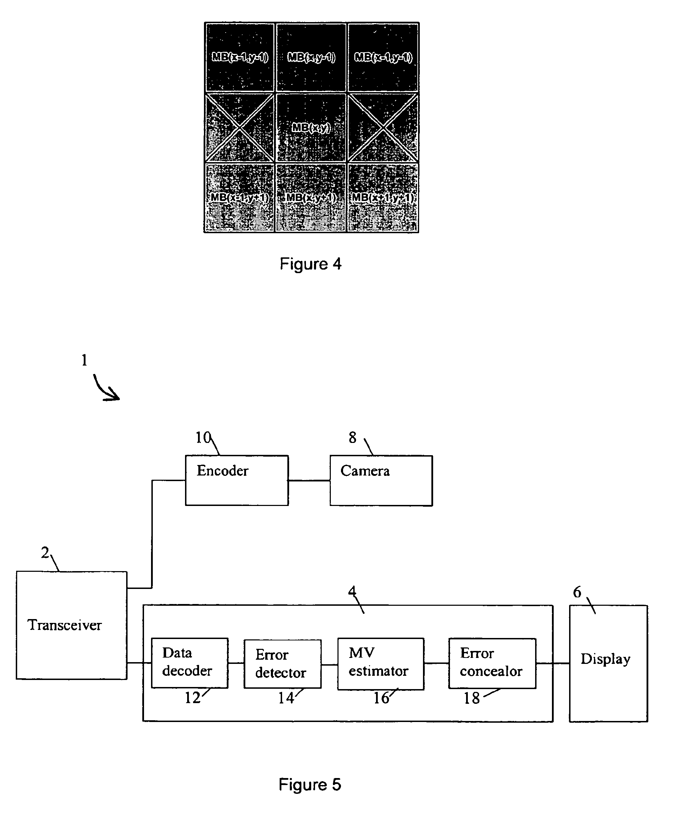

Fig. 2 shows a central MB with its 8 neighbouring blocks. When a motion vector is lost, it can be estimated from the motion vectors of neighbouring MBs. That is because normally the motion vectors of the MBs neighbouring a central MB as shown in Fig. 2 are correlated to some extent to the central MB, because neighbouring MBs in an image often move in a similar manner. Fig. 3 illustrates motion vectors for neighbouring MBs pointing in a similar direction. US 5,724,369 and US 5,737,022 relate to methods where damaged motion vectors are replaced by a motion vector from a neighouring block. It is known to derive an estimate of the motion vector for the central MB from average (ie mean or median) of the motion vectors of neighbouring blocks, as disclosed in US 5,912,707. When a given MB is damaged, it is likely that the horizontally adjacent MBs are also damaged, as illustrated in Fig. 4. Thus, those motion vectors may be omitted from the averaging calculation.

Generally speaking, the median is preferred to the mean, but it requires a significant amount of processing power. Such a computationally expensive approach may be particularly undesirable for certain applications, such as mobile telephones.

As mentioned above, neighbouring MBs in an image often move in a similar fashion, especially if they belong to the same object. It is therefore reasonable as a general rule to estimate a damaged motion vector with reference to motion vectors for adjacent MBs. However, sometimes the neighbouring blocks may not have similar motion, perhaps because different blocks relate to different objects, moving in different directions. In other words, motion vectors are often not uniform or correlated at or around object boundaries in the image. Thus, an estimation of motion vectors which averages neighbouring motion vectors as described above may give an inaccurate result, with a corresponding reduction in the quality of the displayed image. For example, suppose the top row of MBs relate to an object moving in a first direction and the bottom row of MBs relate to a different object moving in the opposite direction, the average value is approximately zero, whereas the central MB actually relates to the object moving in the first direction.

EP-A-0 645 933 relates to methods for estimating a motion vector for an error block using the mean value of neighbouring motion vectors. In one alternative (cols. 9 and 10), surrounding motion vectors are separated into "more active move data" and "less active move data" depending on the magnitude of the motion vectors and comparison with a threshold. These are averaged. If there are more large move vectors than small, then the large move average is used or vice versa.

Aspects of the invention are set out in the accompanying claims.

In general terms, the invention analyses the distribution of the motion vectors for blocks neighbouring, temporally and/or spatially, a given block to determine the most likely motion vector for the given block. This involves grouping the motion vectors according to similarity. Each group corresponds to different types of motion, for example, different directions of motion or different sizes of motion and may, for example, relate to different objects in the image. The invention involves selecting the largest group, because according to probability, the given block is more likely to have similar motion to the largest group than the smallest group. The motion vectors for other groups are disregarded, because it is assumed they relate to different types of motion and thus are irrelevant to the motion of the selected group. The motion vectors in the selected group are averaged to derive an estimation for the motion vector for the given block.

As a result of the invention, a more accurate indication of a damaged motion vector can be derived, and therefore a better displayed image. The amount of processing required can be relatively small, particularly for certain embodiments.

Embodiments of the invention will be described with reference to the accompanying drawings, of which:

Fig. 1 is an illustration of macroblocks in adjacent frames;
Fig. 2 is an illustration of blocks spatially neighbouring a central block;
Fig. 3 is a motion vector graph;
Fig. 4 is an illustration of neighbouring blocks;
Fig. 5 is a schematic block diagram of a mobile phone;
Fig. 6 is a flow diagram;
Fig. 7 is a motion vector graph showing groupings in the form of quadrants;
Fig. 8 is a motion vector graph showing motion vectors;
Fig. 9 is an illustration of temporally and spatially neighbouring blocks;
Fig. 10 is a motion vector graph showing another example of groupings;
Fig. 11 is a motion vector graph showing another example of groupings;
Fig. 12 is a motion vector graph corresponding to Fig. 11;
Fig. 13 illustrates another example of groupings;
Fig. 14 is a search tree;
Fig. 15 is a diagram, showing another example of groupings;
Fig. 16 is a diagram, showing another example of groupings.

Embodiments of the invention will be described in the context of a mobile videophone in which image data captured by a video camera in a first mobile phone is transmitted to a second mobile phone and displayed.

Fig. 5 schematically illustrates the pertinant parts of a mobile videophone 1. The phone 1 includes a transceiver 2 for transmitting and receiving data, a decoder 4 for decoding received data and a display 6 for displaying received images. The phone also includes a camera 8 for capturing images of the user and a coder 10 for encoding the captured images.

The decoder 4 includes a data decoder 12 for decoding received data according to the appropriate coding technique, an error detector 14 for detector errors in the decoded data, a motion vector estimator, 16 for estimating damaged motion vectors, and an error concealer 18 for concealing errors according to the output of the motion vector estimator.

A method of decoding received image data for display on the display 6 according to an embodiment of the invention will be described below.

Image data captured by the camera 8 of the first mobile phone is coded for transmission using a suitable known technique using frames, macroblocks and motion compensation, such as an MPEG-4 techique, for example. The coded data is then transmitted.

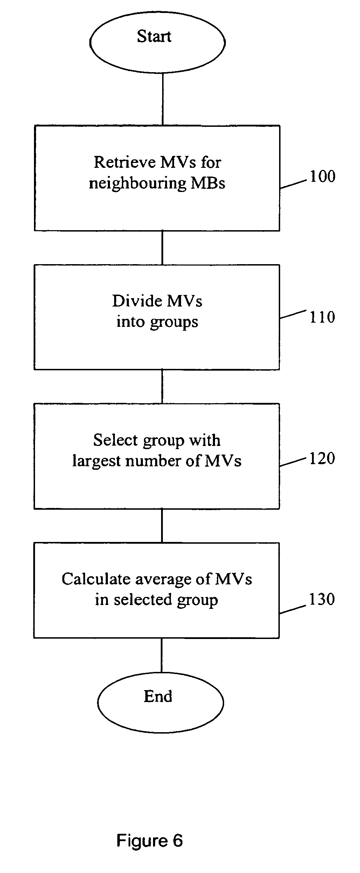

The image data is received by the second mobile phone and decoded by the data decoder 12. As in the prior art, errors occuring in the transmitted data are detected by the error detector 14 and corrected using an error correction scheme where possible. Where it is not possible to correct errors in motion vectors, an estimation method is applied, as described below with reference to the flow chart in Fig. 6, in the motion vector estimator 16.

Suppose an error occurs in a macroblock MB(x,y) and in the corresponding motion vector. The motion vectors (MVs) for 6 neighbouring MBs (see Fig. 4) are retrieved (step 100). In Fig. 4, the MBs that are horizontally adjacent to MB(x,y) are excluded, on the assumption that they are also damaged. However, if the horizontally adjacent motion vectors are not damaged, they may be included in the estimation.

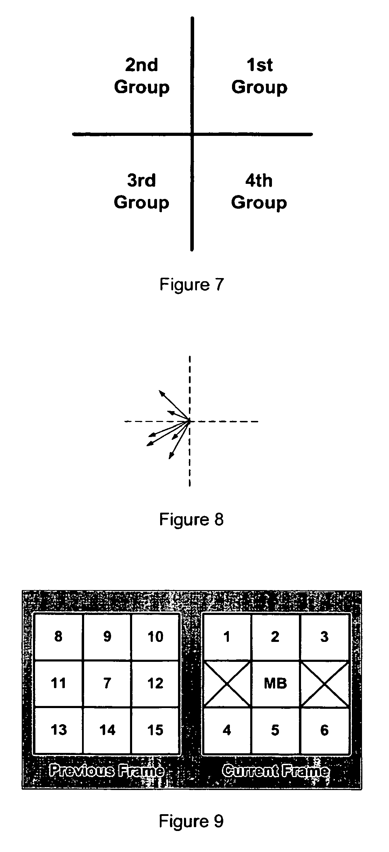

Next, the neighbouring motion vectors are divided into groups (step 110). More specifically, the motion vectors are divided into groups according to the signs of the x and y components, in this embodiment. Fig. 7 illustrates the four groups, which correspond to four quadrants in the x-y plane. The groups can be described as follows; defining a motion vector by $MV_x$ horizontal and $MV_y$ vertical directions:

$$MV = \left(MV_x, MV_y\right)$$

These two horizontal and vertical directions can have positive and negative directions; hence we can have four groups of motion vectors:

$$Group\ 1:\quad MV_x = +ve,\quad MV_y = +ve$$

$$Group\ 2:\quad MV_x = -ve,\quad MV_y = +ve$$

$$Group\ 3:\quad MV_x = -ve,\quad MV_y = -ve$$

$$Group\ 4:\quad MV_x = +ve,\quad MV_y = -ve$$

Then, the group which contains the largest number of motion vectors is selected (step 120).

Then, an average of the motion vectors in the selected group is calculated, omitting the other motion vectors (step 130). The average may be the median or the mean of the selected group. In this embodiment, the mean is calcuated, because it requires less processing power than the median. The mean is calculated using the following formula:

$$V = \frac{1}{M}\sum_{i=1}^{M} V_i$$

*where M out of N motion vectors have similar motion correlation*

Fig. 8 shows an example of 6 motion vectors arising from blocks neighbouring a block with a damaged motion vector. Referring back to Fig. 7, for the motion vectors in Fig. 8, Group 1 (first quadrant) has no motion vectors, Group 2 (second quadrant) has two motion vectors, Group 3 (third quadrant) has four motion vectors and Group 4 (fourth quadrant) has no motion vectors. Group 3 has the largest number of motion vectors and thus is selected as the representative group which is most representative of the motion in the blocks neighbouring the central block MB(x,y). The estimation of the motion vector for the central block MB(x,y) is calcuated as the mean of the motion vectors in Group 3, using equation (1) above.

The damaged MB is then replaced with the MB in the preceding frame corresponding to the calculated motion vector. The full image including the replacement MB is finally displayed on the display 6.

A second embodiment of the invention will now be described.

The second embodiment is similar to the first embodiment. However, in the second embodiment, motion vectors from a previous frame are also used in the motion vector estimation. This is particularly useful, for example, when there are two or more groups of motion vectors for a single frame having the largest number of motion vectors.

Fig. 9 shows a current frame with a central MB and neighbouring blocks numbered 1 to 6. In this embodiment, blocks 7 to 15 from the previous frame are included in the motion estimation. Here, block 7 is the block corresponding spatially to the central block MB in the previous frame, and blocks 8 to 15 are the blocks surrounding block 7 in the previous frame. The motion vectors from the previous frame can be used because they are assumed to be correlated to some extent with those of the current frame. In this embodiment, all the motion vectors for blocks 1 to 6 and blocks 7 to 15 of the preceding frame are grouped, and the group containing the largest number of motion vectors is selected.

In the embodiments described above, the motion vectors are divided into quadrants according to the signs of the x and y components. Zero motion vectors are quite common and therefore in a third embodiment, which is an improvement of the preceding embodiments, an additional group is provided for zero motion vectors, resulting in five groups. An example of possible groupings is set out below.

$$Group\ 1: \quad MV_x \geq 0, \quad MV_y > 0$$

$$Group\ 2: \quad MV_x < 0, \quad MV_y \geq 0$$

$$Group\ 3: \quad MV_x \leq 0, \quad MV_y < 0$$

$$Group\ 4: \quad MV_x > 0, \quad MV_y \leq 0$$

$$Group\ 5: \quad MV_x = 0, \quad MV_y = 0$$

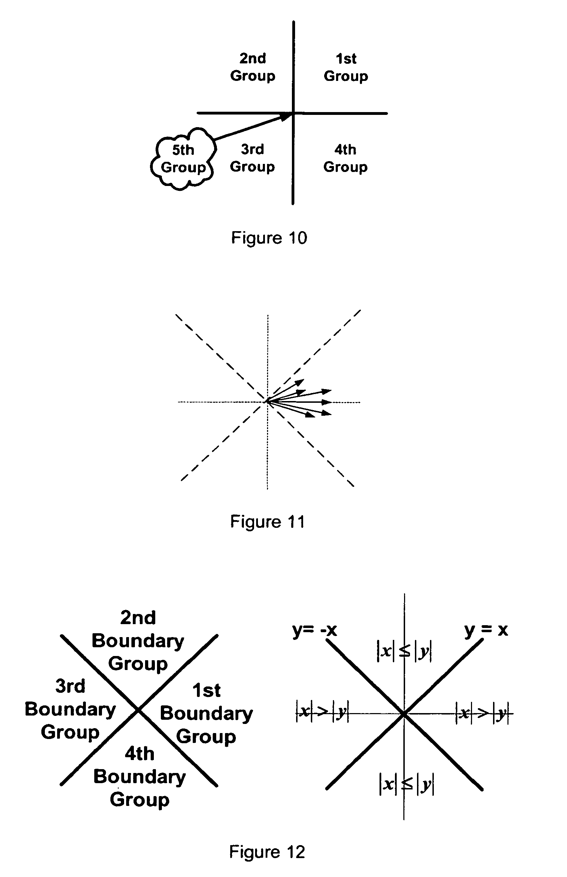

Fig. 10 illustrates the above five groups.
Other groupings can be used by adjusting the equalities and inequalities.
Suppose the motion vectors are centred about one of the x or y axes, as shown in Fig. 10. According to the first embodiment, only the motion vectors in the first quadrant would be used in the averaging. However, this is slightly misleading because the motion vectors in both the first and the fourth quadrant relate to the same type of motion. The fourth embodiment relates to another type of grouping which overcomes this problem, as shown in Fig. 12. Here, the boundaries of the groups in the motion vector x-y plane are the lines y=x and y=-x. These groups can be described as follows:

$$Boundary\ Group\ 1: \quad |MV_x| > |MV_y|, \quad MV_x \geq 0$$

$$Boundary\ Group\ 2: \quad |MV_x| \leq |MV_y|, \quad MV_y > 0$$

$$Boundary\ Group\ 3: \quad |MV_x| > |MV_y|, \quad MV_x < 0$$

$$Boundary\ Group\ 4: \quad |MV_x| \leq |MV_y|, \quad MV_y \leq 0$$

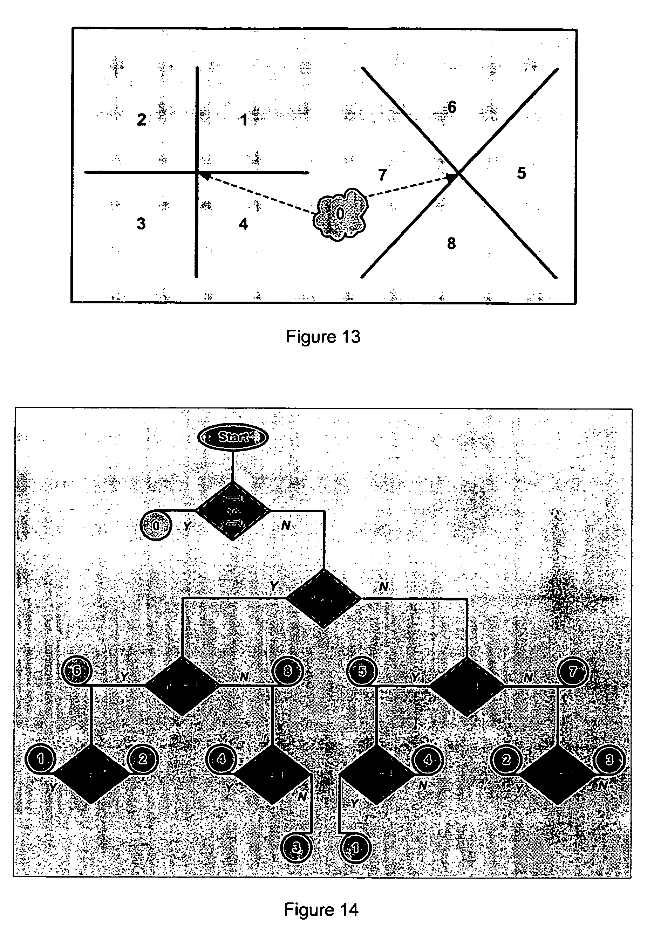

Similarly to above, zero motion vectors can be made an additional group.
In a fifth embodiment, the groupings of the third embodiment and the fourth embodiment are combined. This produces a generic algorithm as set out below. The groupings are illustrated in Fig. 13.

$$Group\ 0: \quad MV_x = 0 \qquad MV_y = 0$$

$$Group\ 1: \quad MV_x \geq 0 \qquad MV_y \geq 0$$

$$Group\ 2: \quad MV_x < 0 \qquad MV_y \geq 0$$

$$Group\ 3: \quad MV_x < 0 \qquad MV_y < 0$$

$$Group\ 4: \quad MV_x \geq 0 \qquad MV_y < 0$$

$$Group\ 5: \quad |MV_y| < |MV_x| \quad MV_x \geq 0$$

$$Group\ 6: \quad |MV_y| \geq |MV_x| \quad MV_y \geq 0$$

$$Group\ 7: \quad |MV_y| < |MV_x| \quad MV_x < 0$$

$$Group\ 8: \quad |MV_y| \geq |MV_x| \quad MV_y < 0$$

Fig. 14 shows a search tree for putting motion vectors into groups according to the fifth embodiment.

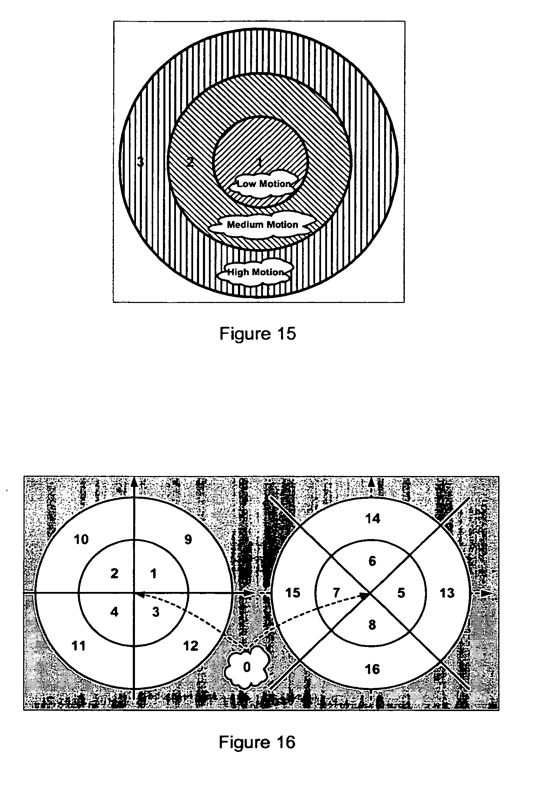

In the above embodiments, the motion vectors are grouped according to their direction. In a sixth embodiment, which falls outside the scope of the claims, the motion vectors are grouped according to size (that is absolute value of the motion vector). Fig. 15 illustrates groups of motion vectors according to size, according to low motion, medium motion and high motion. The motion vectors are grouped by calculating the absolute value and comparing it with threshold values which define the boundaries of the groups. The group with the largest number of members is selected, and it is assumed that the damaged motion vector has a similar size. More specifically, the members of the selected group are averaged (eg mean or median) to obtain an estimated size. The direction of the motion vector is estimated separately and then adjusted to have the estimated size.

A seventh embodiment combines the fifth and the sixth embodiments, to group the motion vectors according to both size and direction. Fig. 16 illustrates the combination. As shown, there are seventeen possible groups dependent on the direction of the motion vector and its size. Here, there are only two possible sizes of motion vectors, although any number of sizes are possible.

The description of the second to the seventh embodiments show how a group of motion vectors are selected. The other steps of the method are as for the first embodiment.

In the embodiments described above, the groups are defined by fixed boundaries, such as the x and y axes in the x and y plane. Alternatively, a boundary of a predetermined shape and size could be moved until it bounds the largest number of motion vectors. For example, referring to Fig. 7, a quadrant shaped area could be rotated successively by a fixed number of degrees, eg 45°, each time counting the number of motion vectors within the boundary of the area, until it returns to the original position, or with just a certain number of rotations. The largest group of motion vectors for one position of the quadrant-shaped area is used to estimate the motion vector. Similarly, for the size, instead of using fixed thresholds, the width of the grouping may be fixed, with the thresholds movable to detect the group containing the largest number of motion vectors.

The motion vectors can be grouped according to other boundaries, for example, describing smaller or larger areas. For example, each boundary could define half a quadrant or two quadrants. However, experience and tests have shown that quadrants provide good solutions without too much complexity. Similarly, the combination of fixed quadrants as in the fifth embodiment produces good results with less complexity than rotating a quadrant. A quadrant is a good compromise because it is large enough to contain motion vectors considered to relate to the same type of motion but small enough to exclude motion vectors relating to other types of motion. For example, two quadrants could include a first group of vectors pointing at 45°, and a second group pointing at 135°, which clearly relate to different types of motion.

The specific embodiments provide simple low processing analysis for excluding motion that relates to a different object or to a fluke motion vector either of which reduces accuracy of estimation.

**Claims**

1.  A method of approximating a motion vector for an image block, the method comprising:

    dividing (110) motion vectors for neighbouring blocks into groups of motion vectors, each group defined on the basis of direction;
identifying and selecting (120) the group having the largest number of members, and
deriving (130) an approximation for the motion vector for the image block from said group of motion vectors, the approximation comprising a representative value of said selected group of motion vectors.

2. A method as claimed in claim 1, wherein the groups of motion vectors are defined on the basis of a combination of direction and size.

3. A method as claimed in claim 1 or claim 2, wherein the representative value is an average of the selected group of motion vectors.

4. A method as claimed in claim 3, wherein the average is the mean value of the selected group of motion vectors.

5. A method as claimed in claim 3, wherein the average is the median value of the selected group of motion vectors.

6. A method as claimed in any preceding claim, wherein the neighbouring blocks include at least one block from the same frame.

7. A method as claimed in any preceding claim, wherein the neighbouring blocks include at least one block from a different frame.

8. A method as claimed in any preceding claim, wherein the motion vectors are divided into groups by comparing the directions of the motion vectors with at least one predetermined direction.

9. A method as claimed in claim 8, wherein the motion vectors are divided into groups by comparing the size of the motion vectors with at least one predetermined value.

10. A method as claimed any preceding claim, wherein the motion vectors are divided into groups by comparing their size and direction with a combination of at least one predetermined value and direction.

11. A method as claimed in any preceding claim, wherein the motion vectors are divided into groups corresponding to quadrants in a motion vector graph.

12. A method as claimed in claim 11, wherein the boundaries of the quadrants correspond to the principal axes.

13. A method as claimed in claim 11 or claim 12, wherein the boundaries of the quadrants are different from the principal axes.

14. A method as claimed in claim 13, wherein the boundaries of the quadrants are at approximately 45 deg. to the principal axes.

15. A method as claimed in any preceding claim, wherein one group corresponds to a zero motion vector.

16. A computer program for executing all the steps of the method as claimed in any preceding claim.

17. A data storage medium storing a computer program as claimed in claim 16.

18. Apparatus comprising processing means adapted to execute a method as claimed in any one of claims 1 to 15.

19. Apparatus as claimed in claim 18, comprising a data decoding means (12), error detecting means (14), a motion vector estimator (16) and error concealing means (18).

20. A receiver for a communication system comprising an apparatus as claimed in claim 18 or claim 19.

21. A receiver as claimed in claim 20, which is a mobile video telephone, a videophone, video conference phone or a receiver used for a video link.

**Patentansprüche**

1. Verfahren zum näherungsweisen Berechnen eines Bewegungsvektors für einen Bildblock, wobei das Verfahren Folgendes umfasst:

   Aufteilen (110) von Bewegungsvektoren für benachbarte Blöcke in Gruppen von Bewegungsvektoren, wobei jede Gruppe auf der Grundlage von Richtung definiert wird;
   Identifizieren und Auswählen (130) der Gruppe, welche die größte Anzahl an Elementen aufweist, und
   Ableiten (130) einer Annäherung für den Bewegungsvektor für den Bildblock von der Gruppe der Bewegungsvektoren, wobei das näherungsweise Berechnen einen repräsentativen Wert der ausgewählten Gruppe von Bewegungsvektoren umfasst.

2. Verfahren nach Anspruch 1, wobei die Gruppen der Bewegungsvektoren auf der Grundlage einer Kombination von Richtung und Größe definiert werden.

3. Verfahren nach Anspruch 1 oder 2, wobei der repräsentative Wert ein Durchschnitt der ausgewählten Gruppe von Bewegungsvektoren ist.

4. Verfahren nach Anspruch 3, wobei der Durchschnitt der Mittelwert der ausgewählten Gruppe von Bewegungsvektoren ist.

5. Verfahren nach Anspruch 3, wobei der Durchschnitt der Medianwert der ausgewählten Gruppe von Bewegungsvektoren ist.

6. Verfahren nach einem der vorangehenden Ansprüche, wobei die benachbarten Blöcke wenigstens einen Block aus demselben Einzelbild umfassen.

7. Verfahren nach einem der vorangehenden Ansprüche, wobei die benachbarten Blöcke wenigstens einen Block aus einem unterschiedlichen Einzelbild umfassen.

8. Verfahren nach einem der vorangehenden Ansprüche, wobei die Bewegungsvektoren durch Vergleichen der Richtungen der Bewegungsvektoren mit wenigstens einer vorbestimmten Richtung in Gruppen aufgeteilt sind.

9. Verfahren nach Anspruch 8, wobei die Bewegungsvektoren durch Vergleichen der Größe der Bewegungsvektoren mit wenigstens einem vorbestimmten Wert in Gruppen aufgeteilt sind.

10. Verfahren nach einem der vorangehenden Ansprüche, wobei die Bewegungsvektoren durch Vergleichen ihrer Größe und Richtung mit einer Kombination von wenigstens einem vorbestimmten Wert und einer vorbestimmten Richtung in Gruppen aufgeteilt sind.

11. Verfahren nach einem der vorangehenden Ansprüche, wobei die Bewegungsvektoren entsprechend von Quadranten in einem Bewegungsvektorgraph in Gruppen aufgeteilt sind.

12. Verfahren nach Anspruch 11, wobei die Grenzen der Quadranten den Hauptachsen entsprechen.

13. Verfahren nach Anspruch 11 oder Anspruch 12, wobei die Grenzen der Quadranten unterschiedlich zu den Hauptachsen sind.

14. Verfahren nach Anspruch 13, wobei die Grenzen der Quadranten in ungefähr 45° zu den Hauptachsen liegen.

15. Verfahren nach einem der vorangehenden Ansprüche, wobei eine Gruppe einem Nullbewegungsvektor entspricht.

16. Computerprogramm zum Ausführen aller Schritte des Verfahrens nach einem der vorangehenden Ansprüche.

17. Datenspeichermedium, welches ein Computerprogramm nach dem Anspruch 16 speichert.

18. Vorrichtung, umfassend Mittel zum Durchführen eines Verfahrens gemäß einem der Ansprüche 1 bis 15.

**19.** Vorrichtung nach Anspruch 18, umfassend ein Datendecodiermittel (12), Fehlererkennungsmittel (14), Bewegungsvektorschätzfunktionsmittel (16) und Fehlerverschleierungsmittel (18).

**20.** Empfänger für ein Kommunikationssystem, umfassend eine Vorrichtung nach Anspruch 18 oder Anspruch 19.

**21.** Empfänger nach Anspruch 20, welcher ein Videomobiltelefon, Videotelefon, Videokonferenztelefon oder ein für einen Video-Link verwendeter Empfänger ist.

**Revendications**

**1.** Procédé pour approximer un vecteur de mouvement pour un bloc image, le procédé comprenant les étapes consistant à :

diviser (110) des vecteurs de mouvement pour des blocs voisins en groupes de vecteurs de mouvement, chaque groupe étant défini sur la base d'une direction ;
identifier et sélectionner (120) le groupe ayant le plus grand nombre de membres, et
dériver (130) une approximation pour le vecteur de mouvement pour le bloc image à partir dudit groupe de vecteurs de mouvement, l'approximation comprenant une valeur représentative dudit groupe sélectionné de vecteurs de mouvement.

**2.** Procédé tel que revendiqué dans la revendication 1, dans lequel les groupes de vecteurs de mouvement sont définis sur la base d'une combinaison de direction et de grandeur.

**3.** Procédé tel que revendiqué dans la revendication 1 ou la revendication 2, dans lequel la valeur représentative est une moyenne du groupe sélectionné de vecteurs de mouvement.

**4.** Procédé tel que revendiqué dans la revendication 3, dans lequel la moyenne est la valeur moyenne du groupe sélectionné de vecteurs de mouvement.

**5.** Procédé tel que revendiqué dans la revendication 3, dans lequel la moyenne est la valeur médiane du groupe sélectionné de vecteurs de mouvement.

**6.** Procédé tel que revendiqué dans l'une quelconque des revendications précédentes, dans lequel les blocs voisins comprennent au moins un bloc de la même trame.

**7.** Procédé tel que revendiqué dans l'une quelconque des revendications précédentes, dans lequel les blocs voisins comprennent au moins un bloc d'une trame différente.

**8.** Procédé tel que revendiqué dans l'une quelconque des revendications précédentes, dans lequel les vecteurs de mouvement sont divisés en groupes en comparant les directions des vecteurs de mouvement à au moins une direction prédéterminée.

**9.** Procédé tel que revendiqué dans la revendication 8, dans lequel les vecteurs de mouvement sont divisés en groupes en comparant la grandeur des vecteurs de mouvement à au moins une valeur prédéterminée.

**10.** Procédé tel que revendiqué dans l'une quelconque des revendications précédentes, dans lequel les vecteurs de mouvement sont divisés en groupes en comparant leur grandeur et leur direction à une combinaison d'au moins une valeur et une direction prédéterminées.

**11.** Procédé tel que revendiqué dans l'une quelconque des revendications précédentes, dans lequel les vecteurs de mouvement sont divisés en groupes correspondant à des quadrants dans un graphique de vecteurs de mouvement.

**12.** Procédé tel que revendiqué dans la revendication 11, dans lequel les limites des quadrants correspondent aux axes principaux.

**13.** Procédé tel que revendiqué dans la revendication 11 ou la revendication 12, dans lequel les limites des quadrants sont différentes des axes principaux.

**14.** Procédé tel que revendiqué dans la revendication 13, dans lequel les limites des quadrants sont approximativement à 45 degrés des axes principaux.

**15.** Procédé tel que revendiqué dans l'une quelconque des revendications précédentes, dans lequel un groupe correspond à un vecteur de mouvement nul.

**16.** Programme informatique pour exécuter toutes les étapes du procédé tel que revendiqué dans l'une quelconque des revendications précédentes.

**17.** Support de stockage de données stockant un programme informatique tel que revendiqué dans la revendication 16.

**18.** Appareil comprenant des moyens de traitement adaptés pour exécuter un procédé tel que revendiqué dans l'une quelconque des revendications 1 à 15.

**19.** Appareil tel que revendiqué dans la revendication 18, comprenant un moyen de décodage de données (12), un moyen de détection d'erreur (14), un estimateur de vecteur de mouvement (16) et un moyen de dissimulation d'erreur (18).

**20.** Récepteur pour un système de communication comprenant un appareil tel que revendiqué dans la revendication 18 ou la revendication 19.

**21.** Récepteur tel que revendiqué dans la revendication 20, lequel est un téléphone vidéo mobile, un vidéophone, un téléphone de vidéoconférence ou un récepteur utilisé pour une liaison vidéo.

Figure 1

Figure 2

Figure 3

Figure 4

Figure 5

```
        ┌─────────────┐
        │    Start    │
        └─────────────┘
               │
   ┌───────────────────────┐
   │     Retrieve MVs for  │──── 100
   │    neighbouring MBs    │
   └───────────────────────┘
               │
   ┌───────────────────────┐
   │      Divide MVs        │──── 110
   │      into groups       │
   └───────────────────────┘
               │
   ┌───────────────────────┐
   │     Select group with  │──── 120
   │   largest number of MVs │
   └───────────────────────┘
               │
   ┌───────────────────────┐
   │  Calculate average of MVs │──── 130
   │     in selected group  │
   └───────────────────────┘
               │
        ┌─────────────┐
        │     End     │
        └─────────────┘
```

Figure 6

Figure 7

Figure 8

Figure 9

**Figure 10**

**Figure 11**

**Figure 12**

Figure 13

Figure 14

Figure 15

Figure 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0645933 A
- US 2003031253 A
- US 5910827 A
- US 5724369 A
- US 5737022 A
- US 5912707 A

**Non-patent literature cited in the description**

- **HASKELL et al.** Resynchronisation of motion compensated video affected by ATM cell loss. *Digital Signal Processing 2, Estimation, VLSI, San Francisco, March 23-26, 1992, Proceedings of the International Conference on Acoustics, Speech and Signal Processing (ICASSP,* 23 March 1992, vol. 5, 545-548